# EUROPÄISCHE PATENTANMELDUNG

(11) **EP 1 065 079 A2**
(43) Veröffentlichungstag der Anmeldung: **03.01.2001**
(21) Anmeldenummer: 00110956.0
(22) Anmeldetag: 26.05.2000
(51) Int. Cl.: B60H 1/00

(54) **Bedienelement**

(30) Priorität: 30.06.1999 DE 19929973
(71) Anmelder: Volkswagen Aktiengesellschaft, 38436 Wolfsburg (DE)
(72) Erfinder: Schrader, Hartmut, 38368 Grasleben (DE); Parrer, Henry, 38446 Wolfsburg (DE); Weimann, Nils, 38102 Braunschweig (DE); Hasenauer, Silke, 38553 Wasbüttel (DE)

(57) **Zusammenfassung**

Die Erfindung betrifft ein drehbares Bedienelement (1), innerhalb dessen eine Anzeigeeinheit (3) angeordnet ist.

## Beschreibung

Die Erfindung betrifft ein drehbares Bedienelement, insbesondere zum Einsatz in einem Kraftfahrzeug.

In zunehmendem Maße verdrängen drehbare Bedienelemente meist in der Form von Drehknöpfen andere Bedienelemente wie beispielsweise Schieberegler. Ein Vorteil der drehbaren Bedienelemente ist, daß diese relativ kompakt sind und wenig Bauraum benötigen. Ein Nachteil ist jedoch, daß eine aktuelle Einstellung nur schwer ablesbar ist. Bei Funktionen, bei denen die Einstellungen unmittelbar umgesetzt werden, wie beispielsweise der Lautstärkeregelung bei Audio-Systemen, ist dieser Nachteil hinnehmbar, da aufgrund der unmittelbaren Wahrnehmung eine Orientierung über das Bedienelement hinfällig ist. Etwas anders stellt sich die Sache dar, falls über das Bedienelement ein Sollwert eingestellt wird, der erst nach einer gewissen Regelzeit einstellbar ist. Die kann dazu führen, daß der Nutzer nicht den gewünschten Sollwert einstellt, sondern versucht, über Maximal-Einstellungen den gewünschten Sollzustand schneller zu erreichen. Eine derartige Situation tritt beispielsweise bei der Klimaregelung in einem Kraftfahrzeug auf.

Aus der DE 197 35 316 A1 ist eine Anzeigeeinheit einer Fahrzeug-Heiz- oder Klimaanlage bekannt, wobei einem Fahrzeuginsassen ein von ihrem vorgegebenen Sollwert für die Fahrzeuginnenraumtemperatur angezeigt wird und zusätzlich eine Anzeige vorhanden ist, auf der zusätzlich eine signifikante Abweichung zwischen dem Sollwert und dem Istwert angezeigt wird. Das Bedienelement bzw. Sollwertgeber besteht aus einem Drehknopf um den ein Ringelelement angeordnet ist, auf dem alphanumerisch die verschiedenen Sollwerte fest dargestellt sind. An dem Drehknopf ist ein Zeigerelement angeordnet, das auf den aktuell eingestellten Sollwert auf dem Ringelement zeigt. Die zusätzliche Anzeige zur Darstellung der signifikanten Abweichung ist als separate Anzeige in Form von LEDs oder einer LCD-Einheit neben dem Bedienelement angeordnet. Nachteilig an dem bekannten Bedienelement ist zum einen, daß die Sollwerte ähnlich Skalenstriche nur schwer ablesbar sind und zum anderen aufgrund der separaten Anzeige der benötigte Bauraum wieder vergrößert wird.

Der Erfindung liegt daher das technische Problem zugrunde, ein Bedienelement zu schaffen, mittels dessen kompakt eine Einstellung gut visualisierbar ist.

Die Lösung des technischen Problems ergibt sich durch einen Gegenstand mit den Merkmalen des Patentanspruchs 1. Weitere vorteilhafte Ausgestaltungen der Erfindung ergeben sich aus den Unteransprüchen.

Durch die Anordnung einer Anzeigeeinheit innerhalb des drehbaren Bedienelementes, mittels derer eine Einstellung darstellbar ist, kann die Bedieneinheit kompakt aufgebaut werden und dennoch die Einstellung gut visualisiert werden.

Vorzugsweise ist das drehbare Bedienelement als Ring ausgebildet, wobei die Anzeigeeinheit in dem Ring angeordnet ist. Die vorzugsweise als LCD-Anzeige ausgebildete Anzeigeeinheit kann dann entweder den über das Bedienelement eingestellten Sollwert und /oder den Istwert und/oder eine aktive Regelung signalisieren. Eine bevorzugte Verwendung des Bedienelementes ist der Einsatz in einer Fahrzeug-Heiz- oder Klimaanlage oder zur Regulierung einer Sitzheizung in einem Kraftfahrzeug.

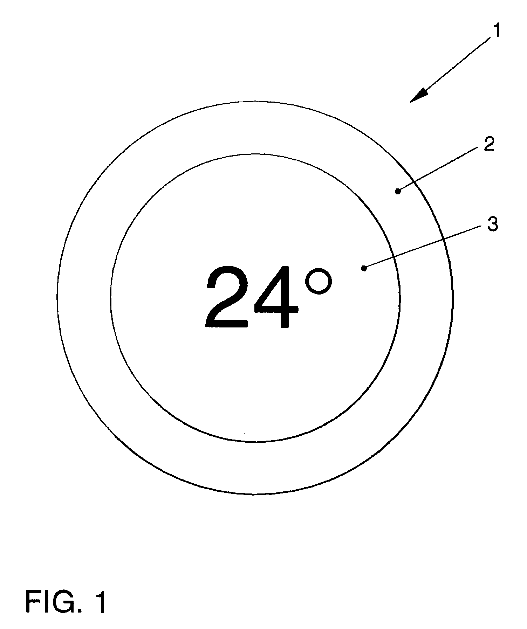

Die Erfindung wird nachfolgend anhand eines bevorzugten Ausführungsbeispiels näher erläutert. Die einzige Figur zeigt eine schematische Draufsicht auf ein Bedienelement.

Das Bedienelement 1 umfaßt einen drehbaren Ring 2 und eine innerhalb des Ringes 2 angeordnete Anzeigeeinheit 3, die als LCD-Anzeige ausgebildet ist. Über den bidirektional drehbaren Ring 2 kann ein Nutzer einen gewünschten Sollwert durch entsprechende Drehung des Ringes 2 einstellen, wobei der jeweils aktuell eingestellte Sollwert über die Anzeigeeinheit 3 visualisiert alphanumerisch dargestellt wird, im vorliegenden Beispiel beispielsweise 24°. Zur vereinfachten Einstellung des gewünschten Sollwertes sind dem Ring Raststellungen zugeordnet. Zur Visualisierung eines noch nicht abgeschlossenen Regelvorganges sind verschiedenen Darstellungen möglich. Zum einen kann der Sollwert blinkend dargestellt werden, solange der Istwert noch nicht den Sollwert erreicht hat. Des weiteren kann der Istwert ergänzend in einer anderen Größe und/oder Farbe dargestellt werden, wobei dann beispielsweise der Istwert blinkend dargestellt wird, um dessen dynamische Anpassung an den Sollwert zu visualisieren. Somit wird erreicht, daß der Sollwert aufgrund der integrierten Anzeigeeinheit 3 größer und besser ablesbar gegenüber den Skalenbeschriftungen visualisiert wird, ohne die Abmessungen des Bedienelementes zu vergrößern. Des weiteren erlaubt die Anzeigeeinheit 3 die Darstellung der dynamischen Anpassung an den Sollwert ohne separate Anzeigeeinheit. Es sind jedoch auch Anwendungsfälle denkbar, in denen der drehbare Ring 2 und die Anzeigeeinheit voneinander unabhängig sind, d.h. über den Ring 2 wird eine Stellgröße eingegeben und über die Anzeigeeinheit 3 ein anderer Parameter visualisiert. Beispielsweise kann über den Ring die Lautstärke eines Radios angepaßt werden und in der Anzeigeeinheit der aktuelle Sender dargestellt werden, so daß die Anzeige- und Bedieneinheit kompakter aufgebaut werden kann.

## Patentansprüche

1. Drehbares Bedienelement,
dadurch gekennzeichnet, daß
innerhalb des drehbaren Bedienelementes (1) eine Anzeigeeinheit (3) angeordnet ist.

2. Bedienelement nach Anspruch 1,
dadurch gekennzeichnet, daß
das Bedienelement als Ring (2) ausgebildet ist.

3. Bedienelement nach Anspruch 1 oder 2,
dadurch gekennzeichnet, daß
das Bedienelement (1) bidirektional drehbar ausgebildet ist.

4. Bedienelement nach einem der vorangegangenen Ansprüche,
dadurch gekennzeichnet, daß
das Bedienelement (1) mit Raststellungen ausgebildet ist.

5. Bedienelement nach einem der vorangegangenen Ansprüche,
dadurch gekennzeichnet, daß
die Anzeigeeinheit (3) als LCD-Anzeige ausgebildet ist.

6. Bedienelement nach einem der vorangegangenen Ansprüche,
dadurch gekennzeichnet, daß
mit der Anzeigeeinheit (3) ein durch das drehbare Bedienelement (1) eingebbarer Sollwert visualisierbar ist.

7. Verwendung eines drehbaren Bedienelementes (1) nach einem der vorangegangenen Ansprüche zur Bedienung einer Fahrzeug-Heiz- oder Klimaanlage eines Kraftfahrzeuges.

8. Verwendung eines drehbaren Bedienelementes (1) nach einem der Ansprüche 1 bis 6 zur Regulierung einer Sitzheizung.
